# EUROPEAN PATENT APPLICATION

(11) **EP 3 871 539 A1**
(43) Date of publication of application: **01.09.2021**
(21) Application number: 19875822.9
(22) Date of filing: 23.10.2019
(51) Int. Cl.: A24F 47/00

(54) **ELECTRONIC DEVICE AND METHOD AND PROGRAM FOR OPERATING ELECTRONIC DEVICE**

(30) Priority: 26.10.2018 WO PCT/JP2018/039849
(71) Applicant: Japan Tobacco Inc., Tokyo 105-6927 (JP)
(72) Inventor: YAMADA, Manabu, Tokyo 130-8603 (JP); TAKEUCHI, Manabu, Tokyo 130-8603 (JP)
(74) Representative: Hoffmann Eitle
(86) International application number: PCT/JP2019/041487
(87) International publication number: WO 2020/085365

(57) **Abstract**

The present invention conserves energy in an electronic device such as an aerosol generation device provided with a voltage conversion circuit. An electronic device 10 according to an embodiment of the present invention is provided with: a control unit 402; a heating unit 40 that heats an aerosol generation base material 110 by power supplied from a power supply 21; a voltage conversion circuit 404 that is provided between the power supply 21 and the heating unit 40 and that converts the voltage of the power supply 21; and a bypass circuit 408 that includes a first switching element 406 provided in parallel with the voltage conversion circuit 404 and that causes power from the power supply 21 to be supplied to the heating unit 40 via the first switching element 406 and not via the voltage conversion circuit 404 when the first switching element 406 is on. The control unit 402 is configured so as to switch on the first switching element 406 when a first condition indicating that the temperature of the heating unit 40 has reached a predetermined temperature is met.

## Description

### TECHNICAL FIELD

The present disclosure relates to an electronic device, and a method and a program for operating the electronic device. More specifically, the present disclosure relates to an electronic device for generating aerosol by heating an aerosol generation base material, a method of operating the electronic device, and a program for causing a processor to execute the method.

### BACKGROUND ART

PTL 1 discloses technology in which in a DC-DC converter including a step-up circuit configured to boost a voltage of a DC power supply, a bypass circuit provided in parallel to the step-up circuit, a drive circuit configured to turn on and off an FET which is a switching element of the bypass circuit, and a CPU configured to output a control signal to control the step-up circuit and the drive circuit, the degradation or burnout of the bypass circuit element is prevented even if the CPU falsely outputs the control signal.

However, PTL 1 does not disclose a problem which may possibly arise when the DC-DC converter is applied to an aerosol generation device, and technology that may solve such a problem.

### CITATION LIST

### PATENT LITERATURE

PTL 1: Japanese Patent Laid-Open No. 2015-95948

### SUMMARY OF INVENTION

### TECHNICAL PROBLEM

The present disclosure has an object to provide technology for achieving energy conservation in an electronic device such as an aerosol generation device provided with a voltage conversion circuit.

### SOLUTION TO PROBLEM

According to an embodiment of the present disclosure, there is provided an electronic device including a control unit, a heating unit that heats an aerosol generation base material by power supplied from a power supply, a voltage conversion circuit that is provided between the power supply and the heating unit and that converts a voltage of the power supply, the converted voltage being used for supply of power to the heating unit, and a bypass circuit that includes a first switching element provided in parallel with the voltage conversion circuit and that causes the power from the power supply to be supplied to the heating unit via the first switching element and not via the voltage conversion circuit when the first switching element is on, wherein the control unit is configured to switch on the first switching element when a first condition indicating that a temperature of the heating unit has reached a predetermined temperature is met.

In an embodiment, the electronic device further includes a temperature detection unit that detects the temperature of the heating unit, wherein the predetermined temperature is a maximum temperature in a heating profile defined for the heating unit.

In an embodiment, the control unit is further configured to pulse-width modulate a voltage to be applied to the heating unit so that the temperature of the heating unit changes according to a heating profile defined for the heating unit, and the first condition is that a duty ratio of the pulse width modulation is equal to or less than a first threshold.

In an embodiment, the control unit is further configured to switch on the first switching element when a second condition indicating that the temperature of the heating unit is equal to or less than a second threshold is met after the first condition is met.

In an embodiment, the control unit is further configured to switch on the first switching element after the first condition is met, and control to maintain the predetermined temperature for a predetermined period of time.

In an embodiment, the electronic device further includes a second switching element for switching on/off supply of power from the power supply to the voltage conversion circuit, wherein the control unit is further configured to switch off the second switching element when switching on the first switching element.

In an embodiment, the second switching element is included in the voltage conversion circuit.

In an embodiment, the control unit is further configured to send an off command to the voltage conversion circuit when switching on the first switching element.

In an embodiment, the second threshold is a value between 200 and 240 degrees Celsius.

In an embodiment, the control unit is further configured to measure the number of times of suction based on a change in the temperature of the heating unit.

In an embodiment, the heating unit has a shape such that the aerosol generation base material is heated from surroundings.

In an embodiment, the electronic device further includes a recess capable of receiving the aerosol generation base material.

In an embodiment, the voltage conversion circuit is a step-up DC/DC converter.

In an embodiment, the electronic device further includes the power supply.

In an embodiment, the control unit is configured to switch off the first switching element when the voltage of the power supply is equal to or less than a first threshold voltage and equal to or greater than a second threshold voltage. The second threshold voltage is a voltage indicating that a capacity required to use up only first predetermined number of the unused aerosol generation base materials remains in the power supply, and the first threshold voltage is greater than the second threshold voltage by a predetermined value.

In an embodiment, the first threshold voltage is less than a voltage indicating that a capacity required to use up second predetermined number of the unused aerosol generation base material remains in the power supply, and the second predetermined number is greater than the first predetermined number.

In addition, according to an embodiment of the present disclosure, there is provided a method of operating an electronic device, the method including steps of heating an aerosol generation base material by power supplied from a power supply to a heating unit, in which a voltage of the power supply is converted by a voltage conversion circuit provided between the power supply and the heating unit and the converted voltage is used for the supply of the power, and supplying the power of the power supply to the heating unit via the first switching element and not via the voltage conversion circuit when a first switching element provided in parallel with the voltage conversion circuit is on. The first switching element is switched on when a first condition indicating that a temperature of the heating unit has reached a predetermined temperature is met.

In an embodiment, the predetermined temperature is a maximum temperature in a heating profile defined for the heating unit.

In an embodiment, the first switching element is switched off when the voltage of the power supply is equal to or less than a first threshold voltage and equal to or greater than a second threshold voltage. The second threshold voltage is a voltage indicating that a capacity required to use up only first predetermined number of unused aerosol generation base materials remains in the power supply, and the first threshold voltage is a voltage greater than the second threshold voltage by a predetermined value.

The first threshold voltage is less than a voltage indicating that a capacity required to use up second predetermined number of the unused aerosol generation base material remains in the power supply, and the second predetermined number is greater than the first predetermined number.

According to an embodiment of the present disclosure, there is provided a program which, when being executed by a processor, causes the processor to perform the above-described method.

### ADVANTAGEOUS EFFECTS OF INVENTION

According to an embodiment of the present disclosure, there can be provided technology for achieving energy conservation in an electronic device such as an aerosol generation device provided with a voltage conversion circuit.

### BRIEF DESCRIPTION OF DRAWINGS

[Fig. 1A] Fig. 1A is an overall perspective view of an electronic device according to an embodiment of the present disclosure.
[Fig. 1B] Fig. 1B is an overall perspective view of the electronic device in a state where an aerosol generation base material is held, according to an embodiment of the present disclosure.
[Fig. 2] Fig. 2 is a cross-sectional view of a smoking article.
[Fig. 3] Fig. 3 is a cross-sectional view taken along line 3-3 illustrated in Fig. 1A.
[Fig. 4] Fig. 4 is a block diagram schematically illustrating a configuration of the electronic device according to an embodiment of the present disclosure.
[Fig. 5] Fig. 5 is a graph showing an example of the heating profile previously defined for a heating unit of the electronic device according to an embodiment of the present disclosure.
[Fig. 6A] Fig. 6A is a flowchart illustrating an operation method of the electronic device according to an embodiment of the present disclosure.
[Fig. 6B] Fig. 6B is a flowchart illustrating an operation method of the electronic device according to an embodiment of the present disclosure.
[Fig. 7A] Fig. 7A is a flowchart illustrating an operation method of the electronic device according to an embodiment of the present disclosure.
[Fig. 7B] Fig. 7B is a flowchart illustrating an operation method of the electronic device according to an embodiment of the present disclosure.
[Fig. 8A] Fig. 8A is a flowchart illustrating an operation method of the electronic device according to an embodiment of the present disclosure.
[Fig. 8B] Fig. 8B is a flowchart illustrating an operation method of the electronic device according to an embodiment of the present disclosure.

### DESCRIPTION OF EMBODIMENTS

Hereinafter, embodiments of the present disclosure will be described in detail with reference to the drawings.

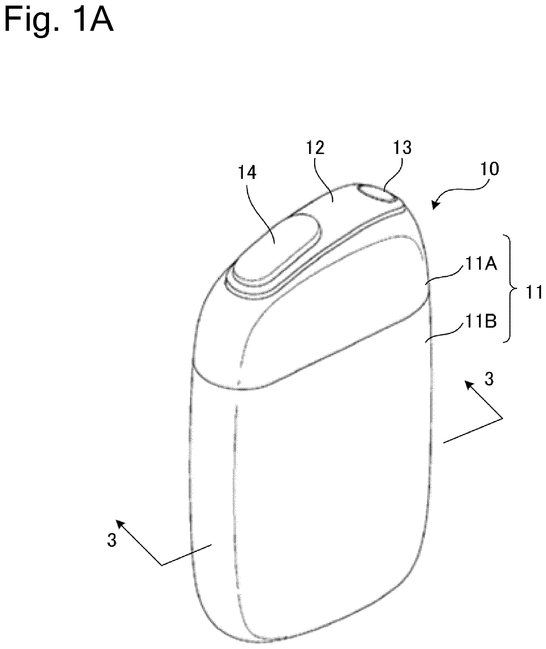

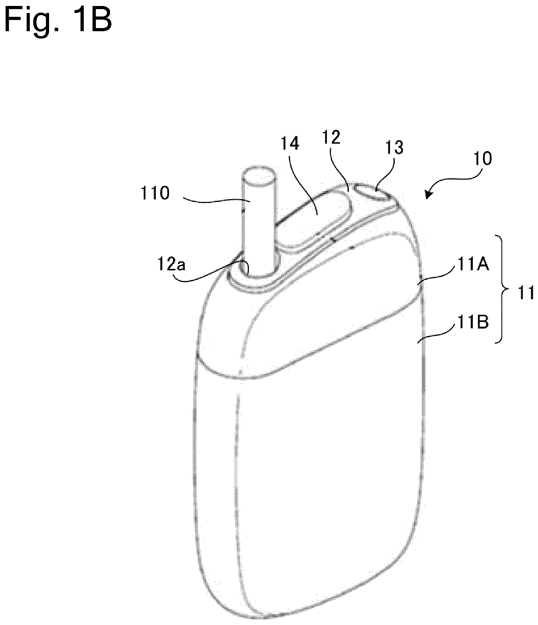

Fig. 1A is an overall perspective view of an electronic device according to an embodiment of the present disclosure. Fig. 1B is an overall perspective view of the electronic device in a state where an aerosol generation base material is held, according to an embodiment of the present disclosure. In the present embodiment, an electronic device 10 is configured to generate aerosol containing flavor by heating the aerosol generation base material such as a smoking article that has a flavor generation base material such as a filler including an aerosol source and a flavor source, for example. Hereinafter, in the embodiment related to Figs. 1A to 3, a smoking article 110 is used as the aerosol generation base material.

As will be understood by those skilled in the art, the smoking article 110 is merely an example of the aerosol generation base material. The aerosol source included in the aerosol generation base material may be solid or liquid. The aerosol source may be liquid, for example, polyhydric alcohols such as glycerin or propylene glycol, or water. The aerosol source may contain a tobacco raw material or an extract derived from the tobacco raw material, which releases a smoking flavor component when it is heated. When the electronic device 10 is a medical inhaler such as a nebulizer, the aerosol source may contain a drug to be inhaled by a patient. Depending on the intended use, the aerosol generation base material does not necessarily include the flavor source.

As illustrated in Figs. 1A and 1B, the electronic device 10 includes a top housing 11A, a bottom housing 11B, a cover 12, a switch 13, and a lid 14. The top housing 11A and the bottom housing 11B are connected to each other, to form an outermost housing 11 of the electronic device 10. The housing 11 may be sized to fit into a user's hand. In this case, when the user uses the electronic device 10, the user can hold the electronic device 10 in the hand and suck the aerosol.

The top housing 11A has an opening (not illustrated), and the cover 12 is joined to the top housing 11A to close the opening. As illustrated in Fig. 1B, the cover 12 has an opening 12a through which the smoking article 110 can be inserted. The lid 14 is configured to open and close the opening 12a of the cover 12. Specifically, the lid 14 is attached to the cover 12, and is configured to be movable along a surface of the cover 12 between a first position where the opening 12a is closed and a second position where the opening 12a is opened.

The switch 13 is used to switch on and off the operation of the electronic device 10. For example, when the user operates the switch 13 in a state where the smoking article 110 is inserted into the opening 12a as illustrated in Fig. 1B, power is supplied to a heating unit (not illustrated) from a battery (not illustrated), whereby the smoking article 110 can be heated without being combusted. When the smoking article 110 is heated, aerosol is generated from the aerosol source included in the smoking article 110, the flavor of the flavor source is drawn into the aerosol. The user can suck the aerosol containing the flavor by sucking a portion of the smoking article 110 (a portion illustrated in Fig. 1B) protruding from the electronic device 10. Note that in this specification, a direction in which the aerosol generation base material such as the smoking article 110 is inserted into the opening 12a is referred to as a longitudinal direction of the electronic device 10.

The configuration of the electronic device 10 illustrated in Figs. 1A and 1B is merely an example of a configuration of the electronic device according to the present disclosure. The electronic device according to the present disclosure can be configured in various forms in which the aerosol can be generated by heating the aerosol generation base material including the aerosol source, and the user can suck the generated aerosol source.

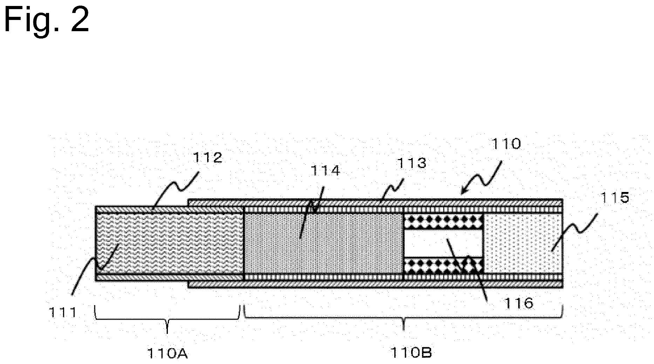

Next, as an example of the aerosol generation base material used in the electronic device 10 according to the present embodiment, the configuration of the smoking article 110 will be described. Fig. 2 is a cross-sectional view of the smoking article 110. In the embodiment illustrated in Fig. 2, the smoking article 110 includes a base material portion 110A that includes a filler 111 (corresponding to an example of the flavor generation base material) and first cigarette paper 112 to be wrapped around the filler 111, and a mouthpiece portion 110B that forms an end portion opposite to the base material portion 110A. The base material portion 110A and the mouthpiece portion 110B are connected to each other by second cigarette paper 113 different from the first cigarette paper 112. However, the base material portion 110A and the mouthpiece portion 110B can be connected to each other using the first cigarette paper 112 without using the second cigarette paper 113.

The mouthpiece portion 110B in Fig. 2 includes a paper tube unit 114, a filter unit 115, and a hollow segment unit 116 that is arranged between the paper tube unit 114 and the filter unit 115. The hollow segment unit 116 includes, for example, a packed bed having one or a plurality of hollow channels, and a plug wrapper that surrounds the packed bed. Since the packing density of fibers in the packed bed is high, the air and aerosol flow only through the hollow channels and scarcely flow through the packed bed, when being sucked. In the smoking article 110, to reduce a decrease in aerosol delivery amount due to filtration of the aerosol components in the filter unit 115, shortening the length of the filter unit 115 so that the hollow segment unit 116 compensates for the shortened length is effective to increase the aerosol delivery amount.

In the embodiment of Fig. 2, the mouthpiece portion 110B is constituted by three segments. However, in another embodiment, the mouthpiece portion 110B may be constituted by one or two segments, or may be constituted by four or more segments. For example, the mouthpiece portion 110B may be also formed without being provided with the hollow segment unit 116, so that the paper tube unit 114 and the filter unit 115 are arranged to be adjacent to each other.

In the embodiment illustrated in Fig. 2, the length in the longitudinal direction of the smoking article 110 is preferably 40 to 90 mm, more preferably 50 to 75 mm, and even more preferably 50 to 60 mm. The circumference of the smoking article 110 is preferably 15 to 25 mm, more preferably 17 to 24 mm or less, and even more preferably 20 to 22 mm In the smoking article 110, the length of the base material portion 110A may be 20 mm, the length of the first cigarette paper 112 may be 20 mm, the length of the hollow segment unit 116 may be 8 mm, and the length of the filter unit 115 may be 7 mm. The length of each of these individual segments can be appropriately changed according to production suitability, required quality, and the like.

In the present embodiment, the filler 111 of the smoking article 110 may contain the aerosol source that is heated at a predetermined temperature to generate aerosol. The aerosol source may be of any type, and substances extracted from various natural products and/or their constituents can be selected depending on the intended use. Examples of the aerosol source include glycerin, propylene glycol, triacetin, 1,3-butanediol, and a mixture thereof. The content of the aerosol source in the filler 111 is not limited to a particular content, and is generally 5% by weight or more and preferably 10% by weight or more, and generally 50% by weight or less and preferably 20% by weight or less, from the viewpoint of sufficiently generating aerosol and imparting a good smoking flavor.

The filler 111 of the smoking article 110 in the present embodiment may contain shredded tobacco as the flavor source. The shredded tobacco may be made of any material, and known materials such as lamina and stems can be used. When the circumference of the smoking article 110 is 22 mm and the length thereof is 20 mm, the range of the content of the filler 111 in the smoking article 110 is, for example, 200 to 400 mg, and preferably 250 to 320 mg. The water content of the filler 111 is, for example, 8 to 18% by weight, and preferably 10 to 16% by weight. With such a water content, the occurrence of winding stain is suppressed, and the winding suitability at the time of manufacturing the base material portion 110A is improved. There are no particular restrictions on the size of the shredded tobacco used as the filler 111 and the method of preparing the shredded tobacco. For example, there may be used shredded tobacco obtained by shredding dried tobacco leaves to a width of 0.8 to 1.2 mm. Alternatively, there may be used shredded tobacco obtained by crushing the dried tobacco leaves to have an average particle size of about 20 to 200 µm and making uniform the crushed leaves to form into a sheet, and then shredding the resultant sheet to the width of 0.8 to 1.2 mm. Alternatively, the above-described sheet may be subjected to the gathering process without being shredded, and the resultant product may be used as the filler 111. Additionally, the filler 111 may contain one or two or more types of flavors. The flavors may be of any types, but from the viewpoint of imparting a good smoking flavor, the flavor is preferably menthol.

In the present embodiment, the first cigarette paper 112 and the second cigarette paper 113 of the smoking article 110 can be made of a base paper having a basis weight of, for example, 20 to 65 gsm, and preferably 25 to 45 gsm. The thickness of the first cigarette paper 112 and the second cigarette paper 113 is not limited to a particular value, but is 10 to 100 µm, preferably 20 to 75 µm, and more preferably 30 to 50 µm, from the viewpoint of rigidity, air permeability, and ease of adjustment during papermaking.

In the present embodiment, the first cigarette paper 112 and the second cigarette paper 113 of the smoking article 110 may contain a filler. The content of the filler may be 10% by weight or more and less than 60% by weight, and preferably 15 to 45% by weight, with respect to the total weight of the first cigarette paper 112 and the second cigarette paper 113. In the present embodiment, it is preferable that the amount of the filler is 15 to 45% by weight, with respect to the preferable range of the basis weight (25 to 45 gsm). As the filler, for example, calcium carbonate, titanium dioxide, kaolin or the like can be used. Paper containing such a filler that is used as a cigarette paper of the smoking article 110 exhibits a bright white-based color that is preferable from the viewpoint of appearance, and can permanently maintain whiteness. When the cigarette paper contains a large amount of such a filler, for example, the ISO whiteness of the cigarette paper can be set to 83% or more. Furthermore, from the viewpoint of practical use as cigarette paper of the smoking article 110, it is preferable that the first cigarette paper 112 and the second cigarette paper 113 have a tensile strength of 8 N / 15 mm or more. This tensile strength can be increased by reducing the content of the filler. Specifically, the tensile strength can be increased when the content of the filler is made smaller than the upper limit of the content of the filler shown in the range of each basis weight described above.

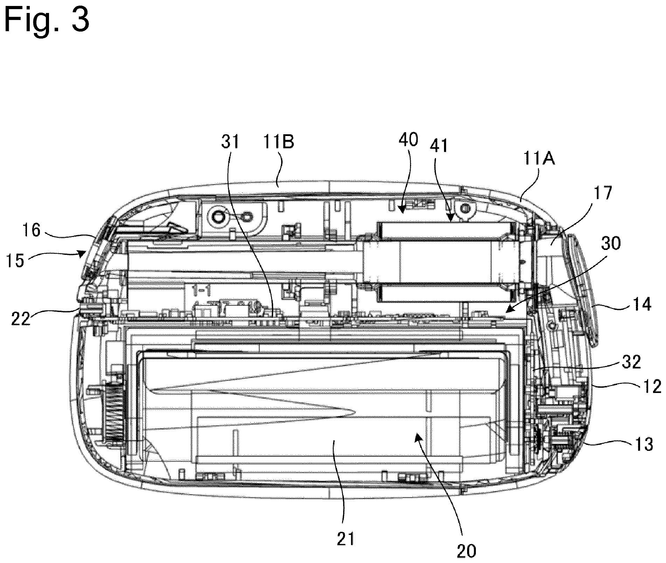

Next, the internal structure of the electronic device 10 illustrated in Figs. 1A and 1B will be described. Fig. 3 is a cross-sectional view taken along line 3-3 illustrated in Fig. 1A. As illustrated in Fig. 3, the electronic device 10 includes a power supply unit 20, a circuit unit 30, and a heating unit 40 in an internal space of the housing 11. The circuit unit 30 may include a first circuit board 31, and a second circuit board 32 that is electrically connected to the first circuit board 31. The first circuit board 31 may be arranged to extend in the longitudinal direction as illustrated in the figure, for example. In this way, the power supply unit 20 and the heating unit 40 are partitioned by the first circuit board 31. As a result, the heat generated in the heating unit 40 can be prevented from being transferred to the power supply unit 20.

The second circuit board 32 may be arranged between the top housing 11A and the power supply unit 20, and extend in a direction orthogonal to the extending direction of the first circuit board 31. The switch 13 may be arranged to be adjacent to the second circuit board 32. When the user presses the switch 13, a part of the switch 13 may come into contact with the second circuit board 32.

The first circuit board 31 and the second circuit board 32 include, for example, a microprocessor and the like, and can control the supply of power from the power supply unit 20 to the heating unit 40. Accordingly, the first circuit board 31 and the second circuit board 32 can control the heating of the smoking article 110 by the heating unit 40.

The power supply unit 20 has a power supply 21 that is electrically connected to the first circuit board 31 and the second circuit board 32. The power supply 21 may be, for example, a rechargeable battery or a non-rechargeable battery. The power supply 21 is electrically connected to the heating unit 40 via at least one of the first circuit board 31 and the second circuit board 32. Thereby, the power supply 21 can supply the power to the heating unit 40 to appropriately heat the smoking article 110. Furthermore, as illustrated in the figure, the power supply 21 may be arranged to be adjacent to the heating unit 40 in a direction orthogonal to the longitudinal direction of the heating unit 40. This can prevent the electronic device 10 from being lengthened in the longitudinal direction even if the size of the power supply 21 is increased.

The electronic device 10 may have a terminal 22 that is connectable to an external power supply. The terminal 22 can be connected to a cable such as a micro-USB, for example. When the power supply 21 is a rechargeable battery, a current flows from the external power supply to the power supply 21 by connecting the external power supply to the terminal 22, whereby the power supply 21 can be charged. Furthermore, the data related to the operation of the electronic device 10 may be transmitted to an external device by connecting a data transmission cable such as a micro-USB to the terminal 22.

The heating unit 40 has a heating assembly 41 extending in the longitudinal direction, as illustrated in the figure. The heating assembly 41 is formed of a plurality of tubular members, and has a tubular body as a whole. The heating assembly 41 is configured so that a part of the smoking article 110 can be housed therein, and has a function of defining a flow path of air supplied to the smoking article 110 and a function of heating the smoking article 110 from the outer periphery.

A vent hole 15 through which air flows into the heating assembly 41 is formed in the bottom housing 11B. Specifically, the vent hole 15 is in fluid communication with one end portion (a left end portion in Fig. 2) of the heating assembly 41. Additionally, the electronic device 10 has a cap 16 that is attachable to or detachable from the vent hole 15. The cap 16 is configured so that the air can flow into the heating assembly 41 through the vent hole 15 even in a state where the cap 16 is attached to the vent hole 15, and may have, for example, a through hole or a notch (not illustrated). When the cap 16 is attached to the vent hole 15, a substance generated from the smoking article 11 inserted into the heating assembly 41 can be prevented from falling from the vent hole 15 to the outside of the housing 11. When the cap 16 is detached, the interior of the heating assembly 41 or the inner side of the cap 16 can be also cleaned.

The other end portion (a right end portion in Fig. 2) of the heating assembly 41 is in fluid communication with the opening 12a illustrated in Fig. 1B. A substantially tubular outer fin 17 is provided between the lid 14 having the opening 12a and the other end portion of the heating assembly 41. When the smoking article 110 is inserted into the electronic device 10 through the opening 12a of the lid 14 as illustrated in Fig. 1B, the smoking article 110 passes through the outer fin 17, and a part of the smoking article 110 is arranged inside the heating assembly 41. Therefore, the outer fin 17 is preferably formed such that an opening thereof on the side closer to the lid 14 has a size larger than an opening thereof on the side closer to the other end portion of the heating assembly 41. This facilitates insertion of the smoking article 110 into the outer fin 17 through the opening 12a.

In a state where the smoking article 110 is inserted into the electronic device 10 through the opening 12a as illustrated in Fig. 1B, when the user sucks from the portion of the smoking article 110 protruding from the electronic device 10, that is, the filter unit 115 illustrated in Fig. 2, the air flows into the heating assembly 41 through the vent hole 15. The air having flowed thereinto passes through the inside of the heating assembly 41, and reaches the mouth of the user together with the aerosol generated from the smoking article 110. Therefore, the side closer to the vent hole 15 of the heating assembly 41 is referred to as an upstream side, and the side closer to the opening 12a of the heating assembly 41 (the side closer to the outer fin 17) is referred to as a downstream side.

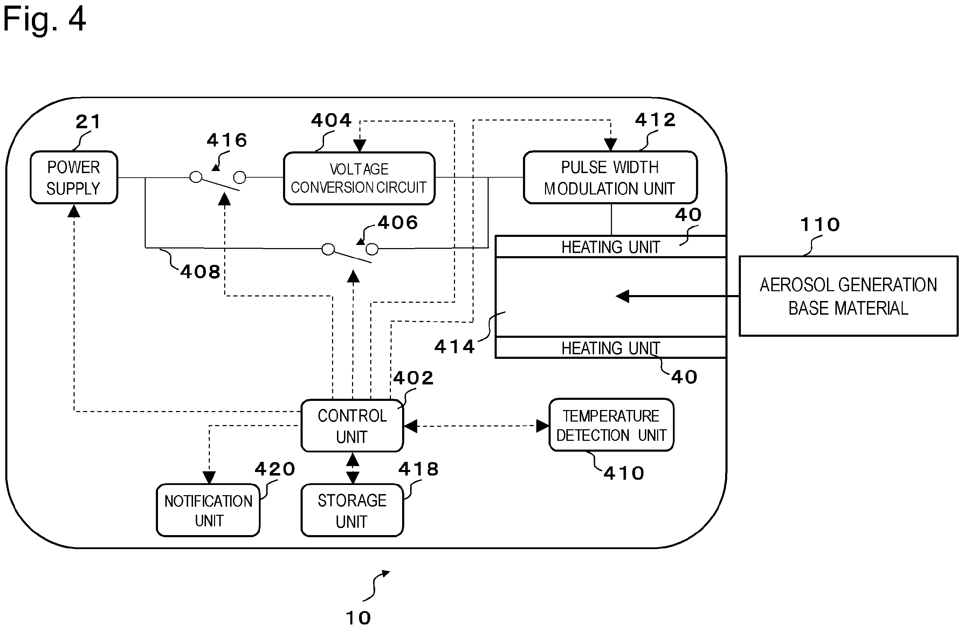

Fig. 4 is a block diagram schematically illustrating a configuration of the electronic device according to an embodiment of the present disclosure. The electronic device 10 in this example includes a control unit 402, the heating unit 40 that includes elements such as the heating assembly 41, a voltage conversion circuit 404, and a bypass circuit 408 that includes a first switching element 406 provided in parallel with the voltage conversion circuit 404. The electronic device 10 may further include the power supply 21. Alternatively, the electronic device 10 may be configured to be connected to another device including the power supply 21, without being provided with the power supply 21. The electronic device 10 may further include other components such as a temperature detection unit 410, a pulse width modulation unit 412, a second switching element 416, a storage unit 418, and a notification unit 420. The second switching element 416 is not necessarily provided. As indicated by dotted arrows in Fig. 4, the control unit 402 is configured to control the power supply 21, the first switching element 406, the second switching element 416, the voltage conversion circuit 404, the pulse width modulation unit 412, the notification unit 420, and the like. The control unit 402 is also configured to control the temperature detection unit 410, the storage unit 418, and the like, and exchange the information with these components.

The electronic device 10 may also include a recess 414 capable of receiving the aerosol generation base material 110 such as the smoking article. The heating unit 40 may have a shape such that the aerosol generation base material 110 can be heated from surroundings. The heating unit 40 heats a portion of the aerosol generation base material 110 received in the recess 414 by the power supplied from the power supply 21.

The voltage conversion circuit 404 is provided between the power supply 21 and the heating unit 40, and is configured to convert the voltage of the power supply 21. The converted voltage is used for the supply of power to the heating unit 40. The voltage conversion circuit 404 may be a step-up DC/DC converter.

The temperature detection unit 410 is configured to detect the temperature of the heating unit 40 (or a load included in the heating unit 40). For example, the temperature detection unit 410 may be configured to detect a value required to obtain a resistance value of the load of the heating unit 40 (a value of the current flowing in the load of the heating unit 40, a value of the voltage applied to the load of the heating unit 40, and the like). In the case where the resistance value of the load of the heating unit 40 has temperature dependence, the temperature of the heating unit 40 can be estimated based on the detected resistance value of the load of the heating unit 40. In another example, the temperature detection unit 410 may include a temperature sensor that detects the temperature of the heating unit 40.

The pulse width modulation unit 412 pulse-width modulates the output voltage of the voltage conversion circuit 404, and applies the pulse-width-modulated voltage to the heating unit 40. The control unit 402 may control the duty ratio of the pulse width modulation so that the temperature of the heating unit 40 obtained from the temperature detection unit 410 becomes a desired temperature.

The control unit 402 is configured to switch on/off the first switching element 406. The power from the power supply 21 is supplied to the heating unit 40 via the bypass circuit 408 and the first switching element 406 and not via the voltage conversion circuit 404 when the first switching element 406 is on.

The control unit 402 may be configured to send an off command to the voltage conversion circuit 404 when switching on the first switching element 406.

In the case where the electronic device 10 includes the second switching element 416, the control unit 402 may be configured to switch on/off the supply of the power from the power supply 21 to the voltage conversion circuit 404 by switching on/off the second switching element 416. In an example, the control unit 402 may be configured to switch off the second switching element 416 when switching on the first switching element 406.

The second switching element 416 may be included in the voltage conversion circuit 404, without being provided separately from the voltage conversion circuit 404.

The control unit 402 may be configured to measure the number of times of suction by the user based on the change in temperature of the heating unit 40 detected by the temperature detection unit 410. For example, in the case where the temperature of the heating unit 40 is reduced by a predetermined value or more within a predetermined period of time, the control unit 402 may determine that one sucking operation has been performed. The number of times of suction measured may be stored in the storage unit 418.

The notification unit 420 operates to issue notice to the user. In an example, the notification unit 420 may include one or a plurality of LEDs configured to emit light in one or a plurality of colors. The notification unit 420 may also include a speaker configured to issue notice by sound. The notification unit 420 may also include a display configured to issue notice by a display on the display.

The storage unit 418 can store various data related to the operation of the electronic device 10. For example, the storage unit 418 may store the data of a heating profile previously defined for the heating unit 40.

In an example, each of the control unit 402, the voltage conversion circuit 404, the first switching element 406, the bypass circuit 408, the temperature detection unit 410, the pulse width modulation unit 412, the second switching element 416, and the storage unit 418 may be included in any of the first circuit board 31 and the second circuit board 32 illustrated in Fig. 3.

Details of operation of the electronic device 10 according to the embodiment of the present disclosure will be described later.

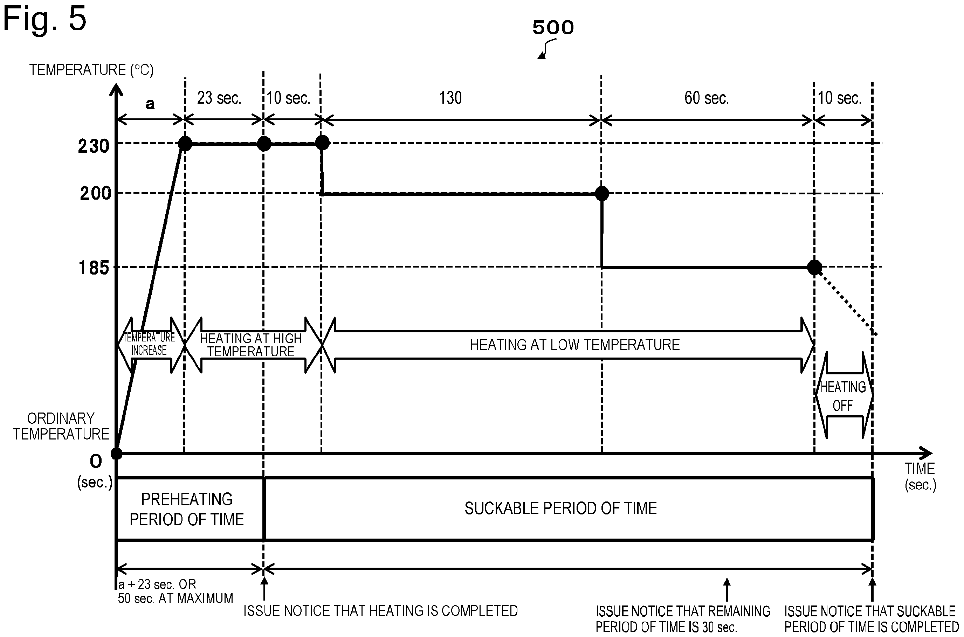

Fig. 5 is a graph showing an example of the heating profile previously defined for the heating unit 40 of the electronic device 10 according to the embodiment of the present disclosure. The horizontal axis and vertical axis of a heating profile 500 represent a time lapsed from the heating start and the temperature of the heating unit 40, respectively. The heating profile 500 may be defined as a heating procedure of the aerosol generation base material 110 required to ideally generate the aerosol in the electronic device 10. As an example, in the case where the aerosol generation base material 110 is a smoking article, the heating profile 500 is defined to provide an aerosol generation process that enables the user to extremely enjoy the flavor of the smoking article or the like.

In another example, the heating profile 500 may be also defined so that the vertical axis represents the resistance value of the load of the heating unit 40.

The heating profile 500 may be stored in the storage unit 418. The control unit 402 may read the heating profile 500 from the storage unit 418, and may control the constituents of the electronic device 10 so that the temperature of the heating unit 40 changes according to the heating profile. For example, the control unit 402 may adjust the duty ratio of the pulse width modulation by the pulse width modulation unit 412 so that the temperature of the heating unit 40 detected by the temperature detection unit 410 becomes the predetermined temperature defined in the heating profile. In the case of the heating profile 500 in another example described above whose vertical axis represents the resistance value of the load of the heating unit 40, the control unit 402 may control the pulse width modulation unit 412 so that the resistance value of the load of the heating unit 40 becomes a predetermined resistance value defined in the heating profile.

In the example in Fig. 5, in the case where the temperature of the heating unit 40 suitable for the ideal aerosol generation is 200°C, the heating profile 500 is defined so that the temperature of the heating unit 40 is increased from an ordinary temperature to the predetermined temperature (in this example, 230°C) higher than 200°C during a temperature increasing period of time "a" from the heating start. The temperature increasing period of time "a" may be a period of time required until the resistance value of the load of the heating unit 40 reaches a predetermined value.

Next, the heating profile 500 is defined so that the temperature of the heating unit 40 is maintained at 230°C for a first predetermined period of time (in this example, 23 seconds). A total period of time of the temperature increasing period of time "a" and the first predetermined period of time may be 50 seconds at maximum. The total period of time may be defined as a preheating period of time of the aerosol generation base material 110. The total period of time may be a period of time required to sufficiently heat the entirety including an inner portion of the aerosol generation base material 110. The control unit 402 may cause the notification unit 420 to issue the notice to the user, to prevent the user from performing the suction operation during the preheating period of time. For example, in the case where the notification unit 420 includes an LED, the control unit 402 may control the notification unit 420 to emit light in a first predetermined color (for example, red). The control unit 402 may also control the notification unit 420 to issue, to the user, the notice that the heating is completed after the lapse of the preheating period of time. For example, the control unit 402 may also control the notification unit 420 to emit light in a second predetermined color (for example, yellow).

Next, the heating profile 500 may be defined so that the temperature of the heating unit 40 is maintained at 230°C for a second predetermined period of time (in this example, 10 seconds). The aerosol generation base material 110 can be reliably heated by setting the second predetermined period of time, even if the aerosol generation base material 110 is not heated sufficiently after the lapse of the preheating period of time for any reason. When the user performs a first suction operation after the lapse of the preheating period of time, air flow generated by the suction operation decreases the temperature of the heating unit 40. The influence on temperature decrease due to the first suction operation can be reduced by maintaining the temperature of the heating unit 40 at 230°C for the second predetermined period of time.

Next, the heating profile 500 may be defined so that the temperature of the heating unit 40 is decreased to a predetermined temperature (in this example, 200°C) and is maintained at the predetermined temperature for a third predetermined period of time (in this example, 130 seconds). In an example, the predetermined temperature is a temperature of the heating unit 40 suitable for the ideal aerosol generation. In the case where the aerosol generation base material 110 is a smoking article, the user can enjoy sufficiently the flavor generated in an optimal state by sucking the smoking article during the third predetermined period of time.

Next, the heating profile 500 may be defined so that the temperature of the heating unit 40 is decreased to a predetermined temperature (in this example, 185°C) and is maintained at the predetermined temperature for a fourth predetermined period of time (in this example, 60 seconds). Since the aerosol generation base material 110 is already heated sufficiently, making the temperature of the heating unit 40 lower than 200°C at this stage does not affect the provision of aerosol to the user. This enables the power supplied to the heating unit 40 to be decreased, thereby contributing to the energy conservation.

Next, the heating profile 500 may be defined so that the heating by the heating unit 40 is stopped and the lapse of a fifth predetermined period of time (in this example, 10 seconds) is waited. Since the supply of the power to the heating unit 40 is stopped, the temperature of the heating unit 40 is decreased from 185°C as indicated by a dotted line in Fig. 5. After the lapse of the fifth predetermined period of time, the control unit 402 may control the notification unit 420 to issue the notice that a suckable period of time is completed. The notice may be output with light emission in a predetermined color or predetermined sound.

In an example, the control unit 402 may control the notification unit 420 to issue, to the user, the notice that a remaining period of time before the completion of the heating profile 500 is less than a predetermined period of time (for example, 30 sec. before the completion). The notice may be output with light emission in a predetermined color or predetermined sound.

The heating profile 500 shown in Fig. 5 is merely an example. It will be understood by those skilled in the art that an appropriate heating profile can be arbitrarily set depending on the intended use of the electronic device 10 for generate the aerosol, the type of the aerosol generation base material 110, and the like.

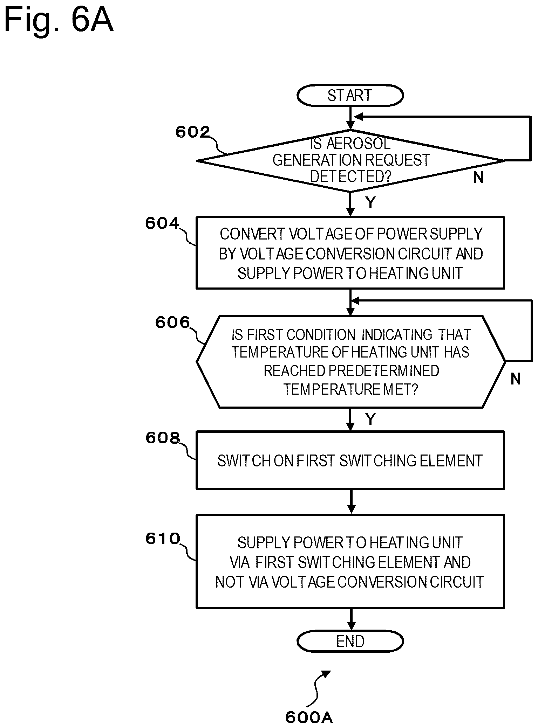

Hereinafter, details of operation of the electronic device 10 according to the embodiment of the present disclosure will be further described with reference to Figs. 6A, 6B, 7A, 7B, 8A, and 8B.

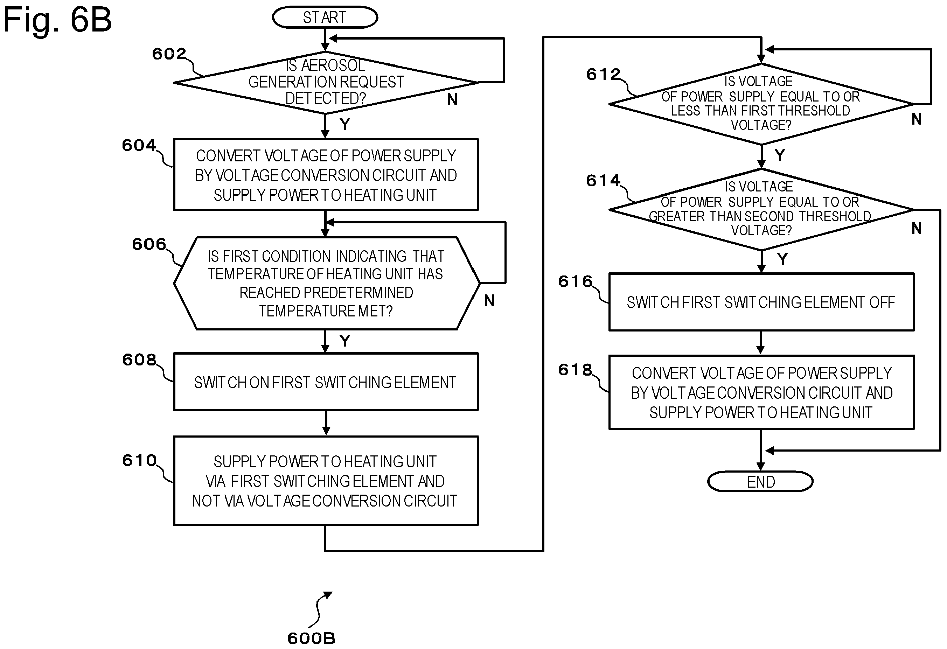

Fig. 6A is a flowchart illustrating an operation method of the electronic device 10 according to an embodiment of the present disclosure. Here, all the steps will be described as being performed by the control unit 402 of the electronic device 10. However, it should be noted that at least some of the steps may be performed by another constituent in the electronic device 10. Additionally, it will be appreciated that the present embodiment, when being executed by a processor such as the control unit 402, can be implemented as a program that causes the processor to perform the method or as a computer readable storage medium storing the same program. The same can also apply to the example described in the context of Figs. 6B, 7A, 7B, 8A, and 8B which will be described later.

The process starts at step 602. The control unit 402 determines whether an aerosol generation request is detected. In an example, when the switch 13 is pressed, the control unit 402 may determine that the aerosol generation request is detected. In another example, the electronic device 10 may be configured to determine that the aerosol generation request is detected based on detecting user's suction. For example, the electronic device 10 may include the pressure sensor, and the control unit 402 may detect the user's suction based on a change in the pressure detected by the pressure sensor.

When the aerosol generation request is not detected ("N" in step 602), the process returns to the point before step 602. When the aerosol generation request is detected ("Y" in step 602), the process proceeds to step 604.

In step 604, the control unit 402 causes the voltage conversion circuit 404 to convert the voltage of the power supply 21, and supplies the power to the heating unit 40.

The process proceeds to step 606, and the control unit 402 determines whether a first condition is met, the first condition indicating that the temperature of the heating unit 40 has reached a predetermined temperature. The predetermined temperature may be a maximum temperature (in the example of Fig. 5, 230°C) in the heating profile 500 defined for the heating unit 40. In an example, the first condition may be that the temperature of the heating unit 40 detected by the temperature detection unit 410 has reached the maximum temperature in the heating profile 500. In another example, the first condition may be that the duty ratio of the pulse width modulation by the pulse width modulation unit 412 is equal to or less than a first threshold. According to the heating profile 500 in Fig. 5, when the temperature of the heating unit 40 reaches the maximum temperature, the supply of the power to the heating unit 40 is controlled so that the temperature of the heating unit 40 is maintained at the maximum temperature. Since this can be achieved by reducing the duty ratio of the pulse width modulation, the first condition can be set as described above. According to this configuration, the control unit 402 can determine whether the temperature of the heating unit 40 has reached the maximum temperature, without directly monitoring the temperature of the heating unit 40.

When the first condition is not met ("N" in step 606), the process returns to the point before step 606. When the first condition is met ("Y" in step 606), the process proceeds to step 608.

In step 608, the control unit 402 switches on the first switching element 406. In this way, the bypass circuit 408 is conducting. In the case where the electronic device 10 includes the second switching element 416 in addition to the first switching element 406, in step 608, the control unit 402 may switch off the second switching element 416.

In step 610, the control unit 402 supplies the power to the heating unit 40 via the first switching element 406 and not via the voltage conversion circuit 404. Since the voltage conversion circuit 404 is not used, the power supply for operating the voltage conversion circuit 404 is not required. Accordingly, the energy conservation can be achieved as compared with the case where the voltage conversion circuit 404 is continuously used.

Fig. 6B is a flowchart illustrating an operation method of the electronic device 10 according to an embodiment of the present disclosure. The contents of the process of steps 602 to 610 are as described above in Fig. 6A.

In step 612, the control unit 402 determines whether the voltage of the power supply 21 is equal to or less than a first threshold voltage. Here, the first threshold voltage may be a voltage greater than, by a predetermined value, a voltage (hereinafter, referred to as a "second threshold voltage") indicating that a capacity required to use up first predetermined number (for example, one) of unused aerosol generation base materials 110 remains in the power supply 21. The first threshold voltage may be less than the voltage indicating that a capacity required to use up second predetermined number (larger than the first predetermined number, for example, two) of unused aerosol generation base material 110 remains in the power supply 21.

In an example, the second threshold voltage may be a fixed value stored in the storage unit 418. The tests on heating of the aerosol generation base material 110 by the electronic device 10 and user's suction may be preliminarily performed under various environments in which the ambient temperature ranges from a low temperature (for example, 0°C) to a high temperature (for example, 40°C). As a result of the tests, the voltage of the power supply 21 when the capacity required to use up only the first predetermined number of unused aerosol generation base materials 110 remains in the power supply 21 in any environment may be set as the above-described fixed value.

The second threshold voltage may be set to change depending on the remaining capacity of the power supply 21. The remaining capacity of the power supply 21 may be measured using a remaining capacity sensor having any configuration. When the remaining capacity of the power supply 21 is equal to or greater than a predetermined value, the second threshold voltage may be a first value. When the remaining capacity of the power supply 21 is less than the predetermined value, the second threshold voltage may be a second value greater than the first value.

In an example, when the remaining capacity of the power supply 21 is equal to or greater than 25%, the control unit 402 may set the second threshold voltage to the first value (for example, 2282 mV). When the electronic device 10 includes the voltage conversion circuit 404 and the voltage conversion circuit 404 is a step-up DC/DC converter, the above-described first value may be a stable operation voltage of the step-up DC/DC converter. This can prevent the operation of the electronic device 10 including the step-up DC/DC converter from being unstable, when the remaining capacity of the power supply 21 is a capacity required to use up only the first predetermined number of unused aerosol generation base materials 110.

When the remaining capacity of the power supply 21 is less than 25%, the control unit 402 may also set the second threshold voltage to the second value (for example, 2408 mV). The second value may be a value required to use up only the first predetermined number of unused aerosol generation base materials 110 even under high temperature environment.

When the voltage of the power supply 21 is equal to or greater than the first threshold voltage ("N" in step 612), the process returns to the point before step 612. When the voltage of the power supply 21 is equal to or less than the first threshold voltage ("Y" in step 612), the process proceeds to step 614.

In step 614, the control unit 402 determines whether the voltage of the power supply 21 is equal to or greater than the second threshold voltage. When the voltage of the power supply 21 is less than the second threshold voltage ("N" in step 614), the process ends. For example, the control unit 402 stops the supply of the power to the heating unit 40.

When the voltage of the power supply 21 is equal to or greater than the second threshold voltage ("Y" in step 614), the process proceeds to step 616. In step 616, the control unit 402 switches off the first switching element 406. In the case where the electronic device 10 includes the second switching element 416 in addition to the first switching element 406, in step 616, the control unit 402 may switch on the second switching element 416.

The process proceeds to step 618, and the control unit 402 causes the voltage conversion circuit 404 to convert the voltage of the power supply 21, and supplies the power to the heating unit 40. After step 618, the process ends. For example, the control unit 402 stops the supply of the power to the heating unit 40.

According to the embodiment of Fig. 6B, even when the remaining capacity of the power supply 21 approaches the capacity required to use up only the first predetermined number (for example, one) of unused aerosol generation base materials 110, the supply of the power using the voltage conversion circuit 404 can compensate for the voltage decrease of the power supply 21, thereby ensuring that the first predetermined number of the aerosol generation base materials 110 can be used up to the last.

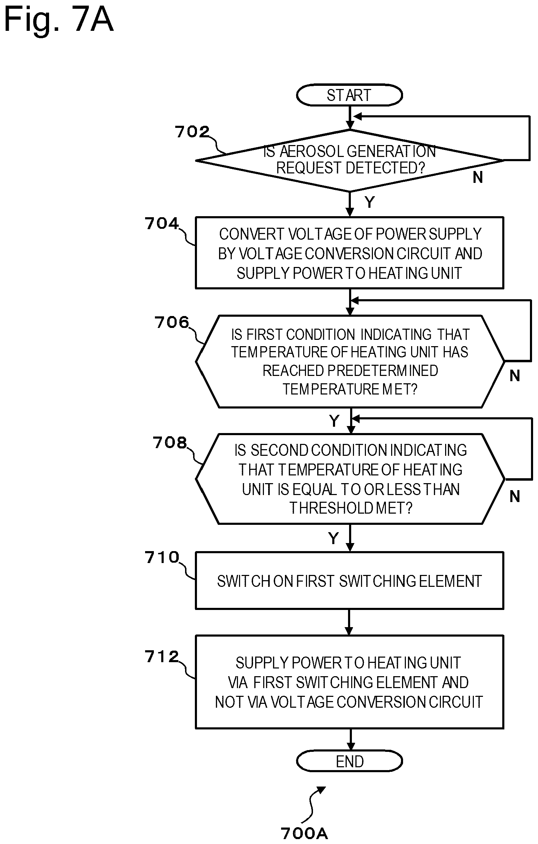

Fig. 7A is a flowchart illustrating an operation method of the electronic device 10 according to an embodiment of the present disclosure. The process of steps 702 to 706 is the same as the process of steps 602 to 606 in Fig. 6A, and therefore the description thereof is omitted.

In step 708, the control unit 402 determines whether a second condition is met, the second condition indicating that the temperature of the heating unit 40 is equal to or less than a threshold. The threshold may change depending on the aspect of the heating profile 500. For example, in the case where the maximum temperature in the heating profile 500 is 230°C as the example shown in Fig. 5, the threshold may be a value between 200°C and 230°C. As another example, in the case where the maximum temperature in the heating profile 500 is 240°C, the threshold may be a value between 200°C and 240°C. When the second condition is not met ("N" in step 708), the process returns to the point before step 708. The power is supplied to the heating unit 40 via the voltage conversion circuit 404, until the second condition is met.

When the second condition is met ("Y" in step 708), the process proceeds to step 710, and the control unit 402 switches on the first switching element 406. The process of steps 710 and 712 is the same as the process of steps 608 and 610 in Fig. 6A.

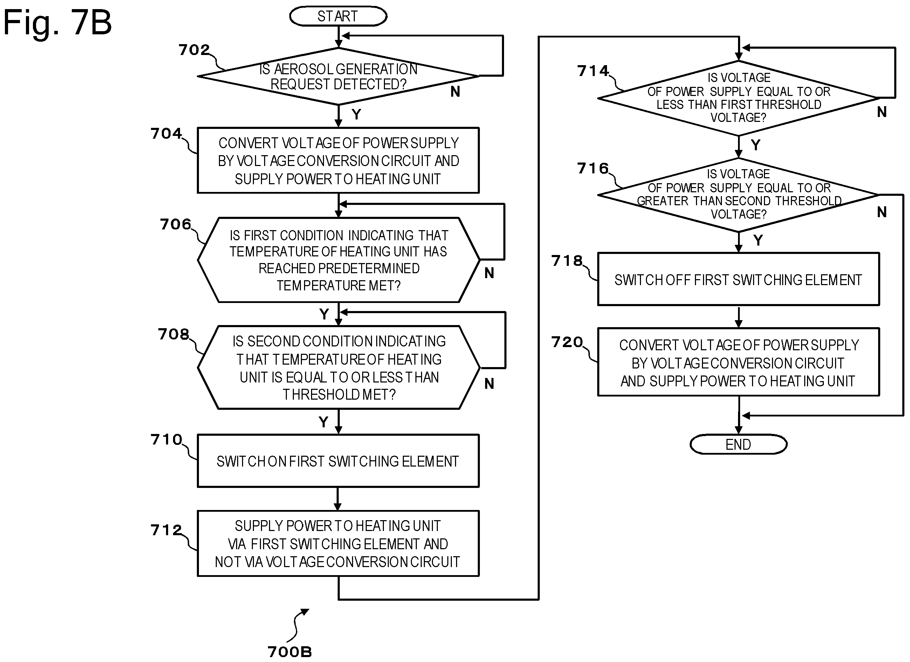

Fig. 7B is a flowchart illustrating an operation method of the electronic device 10 according to an embodiment of the present disclosure. The contents of the process of steps 702 to 712 are as described above in Fig. 7A.

The process of steps 714 to 720 to be performed after step 712 is the same as the process of steps 612 to 618 in Fig. 6B, and therefore the description thereof is omitted here.

According to the embodiment of Fig. 7B, even when the remaining capacity of the power supply 21 approaches the capacity required to use up only the first predetermined number (for example, one) of unused aerosol generation base materials 110, the supply of the power using the voltage conversion circuit 404 can compensate for the voltage decrease of the power supply 21, thereby ensuring that the first predetermined number of the aerosol generation base materials 110 can be used up to the last.

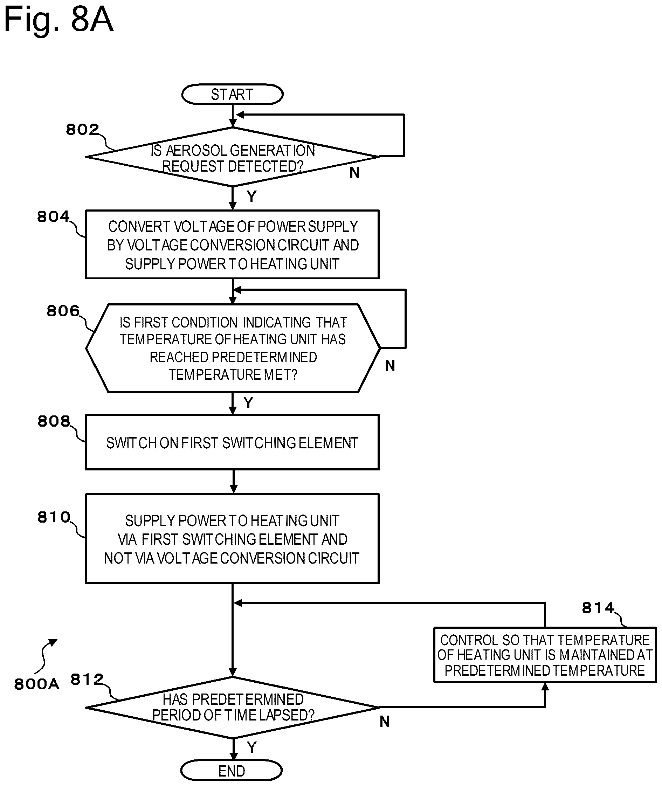

Fig. 8A is a flowchart illustrating an operation method of the electronic device 10 according to an embodiment of the present disclosure. The process of steps 802 to 810 is the same as the process of steps 602 to 606 in Fig. 6A, and therefore the description thereof is omitted.

According to the process in Fig. 8A, when the first condition is met in step 806, the power is supplied to the heating unit 40 via the bypass circuit 408 and the first switching element 406 without using the voltage conversion circuit 404. Accordingly, further energy conservation can be achieved as compared with the example of Fig. 7A in which after the process of step 706 is performed, the voltage conversion circuit 404 is used until the process of step 708 is completed.

After step 810, the process proceeds to step 812, and the control unit 402 determines whether a predetermined period of time has lapsed. Before the predetermined period of time lapses ("N" in step 812), in step 814, the control unit 402 controls so that the temperature of the heating unit 40 is maintained at a predetermined temperature. The predetermined period of time may be, for example, 10 seconds after the preheating period of time in the heating profile 500 of Fig. 5 lapses. The predetermined temperature may be, for example, the maximum temperature in the heating profile 500. The control unit 402 may control the duty ratio of the pulse width modulation by the pulse width modulation unit 412 so that the temperature of the heating unit 40 detected by the temperature detection unit 410 is maintained for the predetermined period of time.

When the predetermined period of time has lapsed ("Y" in step 812), the process of Fig. 8A ends.

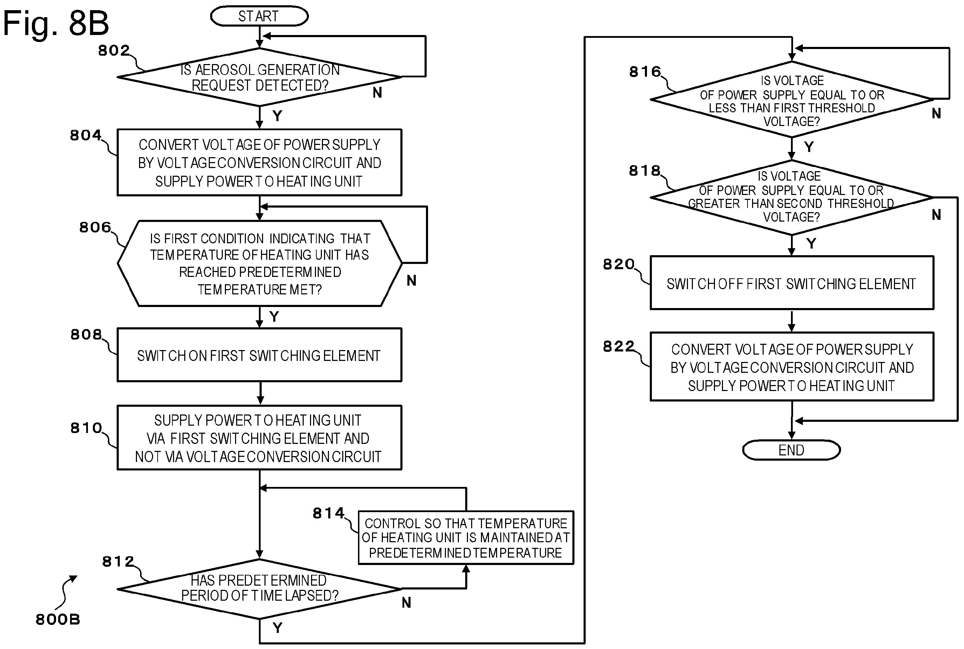

Fig. 8B is a flowchart illustrating an operation method of the electronic device 10 according to an embodiment of the present disclosure. The contents of the process of steps 802 to 814 are as described above in Fig. 8A.

The process of steps 816 to 822 to be performed after step 812 is the same as the process of steps 612 to 618 in Fig. 6B, and therefore the description thereof is omitted here.

According to the embodiment of Fig. 8B, even when the remaining capacity of the power supply 21 approaches the capacity required to use up only the first predetermined number (for example, one) of unused aerosol generation base materials 110, the supply of the power using the voltage conversion circuit 404 can compensate for the voltage decrease of the power supply 21, thereby ensuring that the first predetermined number of the aerosol generation base materials 110 can be used up to the last.

Although the embodiments of the present disclosure have been described above, it is to be understood that the embodiments are merely examples, and do not limit the scope of the present disclosure. It should be understood that modifications, addition, improvements, and the like of the embodiments can be appropriately made without departing from the spirit and scope of the present disclosure. The scope of the present disclosure should not be limited by any of the above-described embodiments, and should be limited only by the appended claims and their equivalents.

### REFERENCE SIGNS LIST

10 ... Electronic device, 11 ... Housing, 11A ... Top housing, 11B ... Bottom housing, 12 ... Cover, 12a ... Opening, 13 ... Switch, 14 ... Lid, 15 ... Vent hole, 16 ... Cap, 17 ... Outer fin, 20 ... Power supply unit, 21 ... Power supply, 22 ... Terminal, 30 ... Circuit unit, 31 ... First circuit board, 32 ... Second circuit board, 40 ... Heating unit, 41 ... Heating assembly, 110 ... Aerosol generation base material or smoking article, 110A ... Base material portion, 110B ... Mouthpiece portion, 111 ... Filler, 112 ... First cigarette paper, 113 ... Second cigarette paper, 114 ... Paper tube unit, 115 ... Filter unit, 116 ... Hollow segment unit, 402 ... Control unit, 404 ... Voltage conversion circuit, 406 ... First switching element, 408 ... Bypass circuit, 410 ... Temperature detection unit, 412 ... Pulse width modulation unit, 414 ... Recess, 416 ... Second switching element, 418 ... Storage unit, 420 ... Notification unit, 500 ... Heating profile

## Claims

1. An electronic device, comprising:
a control unit;
a heating unit that heats an aerosol generation base material by power supplied from a power supply;
a voltage conversion circuit that is provided between the power supply and the heating unit and that converts a voltage of the power supply, the converted voltage being used for supply of power to the heating unit; and
a bypass circuit that includes a first switching element provided in parallel with the voltage conversion circuit and that causes the power from the power supply to be supplied to the heating unit via the first switching element and not via the voltage conversion circuit when the first switching element is on,
wherein the control unit is configured to switch on the first switching element when a first condition indicating that a temperature of the heating unit has reached a predetermined temperature is met.

2. The electronic device according to claim 1, further comprising:
a temperature detection unit that detects the temperature of the heating unit,
wherein the predetermined temperature is a maximum temperature in a heating profile defined for the heating unit.

3. The electronic device according to claim 1, wherein
the control unit is further configured to pulse-width modulate a voltage to be applied to the heating unit so that the temperature of the heating unit changes according to a heating profile defined for the heating unit, and
the first condition is that a duty ratio of the pulse width modulation is equal to or less than a first threshold.

4. The electronic device according to any one of claims 1 to 3, wherein
the control unit is further configured to switch on the first switching element when a second condition indicating that the temperature of the heating unit is equal to or less than a second threshold is met after the first condition is met.

5. The electronic device according to any one of claims 1 to 3, wherein
the control unit is further configured to switch on the first switching element after the first condition is met, and control to maintain the predetermined temperature for a predetermined period of time.

6. The electronic device according to any one of claims 1 to 5, further comprising:
a second switching element for switching on/off supply of power from the power supply to the voltage conversion circuit,
wherein the control unit is further configured to switch off the second switching element when switching on the first switching element.

7. The electronic device according to claim 6, wherein
the second switching element is included in the voltage conversion circuit.

8. The electronic device according to any one of claims 1 to 5, wherein
the control unit is further configured to send an off command to the voltage conversion circuit when switching on the first switching element.

9. The electronic device according to claim 4, wherein
the second threshold is a value between 200 and 240 degrees Celsius.

10. The electronic device according to any one of claims 1 to 9, wherein
the control unit is further configured to measure the number of times of suction based on a change in the temperature of the heating unit.

11. The electronic device according to any one of claims 1 to 10, wherein
the heating unit has a shape such that the aerosol generation base material is heated from surroundings.

12. The electronic device according to any one of claims 1 to 11, wherein
the electronic device further includes a recess capable of receiving the aerosol generation base material.

13. The electronic device according to any one of claims 1 to 12, wherein
the voltage conversion circuit is a step-up DC/DC converter.

14. The electronic device according to any one of claims 1 to 13, wherein
the electronic device further includes the power supply.

15. The electronic device according to any one of claims 1 to 14, wherein
the control unit is configured to switch off the first switching element when the voltage of the power supply is equal to or less than a first threshold voltage and equal to or greater than a second threshold voltage,
the second threshold voltage is a voltage indicating that a capacity required to use up only first predetermined number of the unused aerosol generation base materials remains in the power supply, and
the first threshold voltage is greater than the second threshold voltage by a predetermined value.

16. The electronic device according to claim 15, wherein
the first threshold voltage is less than a voltage indicating that a capacity required to use up second predetermined number of the unused aerosol generation base material remains in the power supply, and the second predetermined number is greater than the first predetermined number.

17. A method of operating an electronic device, comprising:
heating an aerosol generation base material by power supplied from a power supply to a heating unit, wherein a voltage of the power supply is converted by a voltage conversion circuit provided between the power supply and the heating unit and the converted voltage is used for the supply of the power; and
supplying the power of the power supply to the heating unit via the first switching element and not via the voltage conversion circuit when a first switching element provided in parallel with the voltage conversion circuit is on,
wherein the first switching element is switched on when a first condition indicating that a temperature of the heating unit has reached a predetermined temperature is met.

18. The method according to claim 17, wherein
the predetermined temperature is a maximum temperature in a heating profile defined for the heating unit.

19. The method according to claim 17 or 18, wherein
the first switching element is switched off when the voltage of the power supply is equal to or less than a first threshold voltage and equal to or greater than a second threshold voltage,
the second threshold voltage is a voltage indicating that a capacity required to use up only first predetermined number of unused aerosol generation base materials remains in the power supply, and
the first threshold voltage is a voltage greater than the second threshold voltage by a predetermined value.

20. The method according to claim 19, wherein
the first threshold voltage is less than a voltage indicating that a capacity required to use up second predetermined number of the unused aerosol generation base material remains in the power supply, and the second predetermined number is greater than the first predetermined number.

21. A program, when being executed by a processor, causing the processor to perform the method according to any one of claims 17 to 20.
